# EUROPEAN PATENT APPLICATION

(11) **EP 2 357 125 A1**
(43) Date of publication of application: **17.08.2011**
(21) Application number: 10153886.6
(22) Date of filing: 17.02.2010
(51) Int. Cl.: B62K 5/00, A61G 5/06

(54) **Vehicle having a level compensation system**

(71) Applicant: Zouce AB, 722 15 Västerås (SE)
(72) Inventor: Zanderléhn, Karri, 722 15 Västerås (SE); Löfstrand, Mikael, 722 42 Västerås (SE)
(74) Representative: KIPA

(57) **Abstract**

A vehicle (100) having a multiple of level compensation systems is disclosed. The vehicle comprising a chassis (101) having a left frame (102), a right frame (103) and a base plate (104), a first level compensation system comprising a pivot joint (105) for pivotably connecting the left and right frames to the base plate around a common rotational axis (106). A first axial distance (115, 116) from a left rotation axis of a left wheel pair to the rotational axis is different from at least one second axial distance (117, 118) from a right rotation axis of a right wheel pair to the rotational axis, such that the left and right wheel pair have at least one off-set (119, 120) to each other. Moreover a method for traversing stairs with such vehicle is disclosed.

## Description

### Field of the Invention

The present invention pertains in general to the field of terrain vehicles. More particularly the invention relates to a personal vehicle having at least one level compensating system for compensating for level variations in uneven terrain, especially a stair case, and maintain a stable ride. In embodiments the vehicle comprises a pivoting left and right frame wherein said frames has an offset wheel pair.

### Background of the Invention

Many vehicles having level compensation for traversing uneven terrain are known. With regards to vehicles for ascending stair cases different solutions are proposed. For instance, CA 2,227,955 discloses a motorized armchair having two serially connected wheel pairs. A seat may pivot around an axis to maintain a level position in one direction. The large number of serially connected wheels may provide for an increased grip when ascending a stair case, however at the cost of a bulky solution, e.g. when ascending a narrow passage in a stair case.

An issue with prior art vehicles is high weight, in order to provide stability of the vehicle, in particular with a payload of large weight. This limits the practical use of such vehicles, e.g. when wanting to travel in an elevator which has limited surface and load capacity available. Lighter vehicles also need less propelling energy, which is a desired advantage.

US 7,631,380 discloses a spine board having an opposing set of wheel assemblies comprising three wheels for manually maneuvering in stairs.

SU 1833182 discloses a wheel chair for manually surmounting stairs having front driving wheels on a balance arm being pivotable with respect to the wheel chair frame. The front driving wheels are off-set to each other.

US 3,893,533 discloses a recreational motor vehicle for use in rough terrain. The front wheels are offset longitudinally to provide a more stable stance for the vehicle and greater driving traction.

A further issue with prior art is the lack of level compensation that keeps the ride smooth, even when driving in stairs. When ascending or descending the stair each step produce a corresponding zic-zac or rocking motion in the vertical and horizontal directions at the seating position of the vehicle. The lack of level compensation in such terrains also result in an inefficient power transfer and thereby use of energy, as traction is repeatedly lost.

Furthermore, another issue with prior art is the lack of adjustability to different terrains. The user of a personal vehicle may encounter different obstacles, e.g. stairs having varying step dimensions, on a daily basis when moving around in the home environment or a public environment. If the vehicle would be optimized to traverse a staircase at home, it may not be suitable for other obstacles. The need for adjustability of the vehicle is thus important in order to safely and comfortably traversing such varying obstacles. Otherwise several vehicles would be needed, each especially adapted to a particular terrain, due to lack of adjustability, and the user would have to switch vehicles regularly, which may not be possible for a user without help. The degree of freedom and independence could accordingly be improved for the vehicle user.

Hence an improved vehicle and/or method providing an safe and comfortable ride across obstacles having different dimensions would be advantageous and in particular allow for a flexible solution to travel across such varying obstacles.

### Summary of the Invention

Accordingly, embodiments of the present invention preferably seek to mitigate, alleviate or eliminate one or more deficiencies, disadvantages or issues in the art, such as the above-identified, singly or in any combination by providing a vehicle and method according to the appended patent claims.

According to a first aspect of the invention, a vehicle is provided, having a multiple of level compensation systems, the vehicle includes a chassis having a left frame, a right frame, a base plate, a first level compensation system comprising a pivot joint for pivotably connecting the left and right frames to the base plate, whereby the left and right frames are rotatable with respect to each other around a common rotational axis. The left and right frame extends in a direction perpendicular to the rotational axis. The vehicle further includes a left wheel pair comprising a left front wheel and a left rear wheel, the left front wheel and left rear wheels having left rotation axes and being mounted in opposite ends of the left frame, a right wheel pair comprising a right front wheel and a right rear wheel, the right front wheel and right rear wheels having right rotation axes and being mounted in opposite ends of said right frame. At least one first axial distance from a left rotation axis of the left wheel pair to said rotational axis is different from at least one second axial distance from a right rotation axis of the right wheel pair to the rotational axis, such that said left and right wheel pair have at least one off-set to each other.

According to a second aspect of the invention, a method for traversing a stair case with a vehicle according to the first aspect is provided, the stair case having a plurality of steps for traversing in a first direction at a stair angle, the stair case having an axis of inclination parallel to said first direction and perpendicular to step edges, the vehicle having an apex point adjacent to a seat foundation, and left and right wheel pairs having wheels connected to left and right frames, the left and right frames being rotatable with respect to each other, the method comprising adjusting a wheel off-set of at least one wheel of said vehicle based on step dimensions, maintaining said apex point along said axis of inclination during the traversing by applying a first level compensation of a first level compensation system comprising alternating rotational movement of the left and right frames.

A pivot joint is a coupling or union allowing two parts of the joint rotating or turning independently of each other in three dimensional space.

Further embodiments of the invention are defined in the dependent claims, wherein features for the second aspect of the invention is as for the first aspect mutatis mutandis.

It should be emphasized that the term "comprises/comprising" when used in this specification is taken to specify the presence of stated features, integers, steps or components but does not preclude the presence or addition of one or more other features, integers, steps, components or groups thereof.

### Brief Description of the Drawings

These and other aspects, features and advantages of which embodiments of the invention are capable of will be apparent and elucidated from the following description of embodiments of the present invention, reference being made to the accompanying drawings, in which
Fig. 1 is a schematic top view of a vehicle according to an embodiment of the present invention, and
Fig. 2 is a schematic side view from the left of the vehicle of Fig. 1.
Fig. 3 is a schematic detail of Fig. 2.
Fig. 4 is a side view from the left of the detail in Fig. 3 corresponding to a front view of the vehicle in Fig. 1.
Figs. 5a-c are a schematic detail of the vehicle of Fig. 1.
Fig. 6 is a side view from the detail of Fig. 5b.
Fig. 7 is a front view of the detail of Fig. 5c.
Figs. 8a-c are schematic details of the vehicle of Fig. 1 in configurations for traversing topographies.
Fig. 9 is a schematic detail view from the left of the vehicle in Fig. 1 according to an embodiment.
Fig. 10 is a side view from the left of Fig. 9.
Fig. 11 is a schematic top view of the detail of Fig. 9 and 10.
Fig. 12 is a schematic detail view from the left of the vehicle in Fig. 1.
Fig. 13 is a schematic view of Fig 13 showing vehicle mass centers for a sloping surface.
Fig. 14 is a schematic view of Fig 13 showing vehicle mass centers for a different load for a sloping surface.
Fig. 15a-j are side and rear views of the vehicle in Fig. 1 when traversing a staircase.
Fig. 16a-b are side and rear views of the vehicle in Fig. 1 when traversing a staircase according to another embodiment.
Fig. 17a-b show schematic details of the vehicle of Fig. 1 according to an embodiment.

### Description of embodiments

Specific embodiments of the invention will now be described with reference to the accompanying drawings. This invention may, however, be embodied in many different forms and should not be construed as limited to the embodiments set forth herein; rather, these embodiments are provided so that this disclosure will be thorough and complete, and will fully convey the scope of the invention to those skilled in the art. The terminology used in the detailed description of the embodiments illustrated in the accompanying drawings is not intended to be limiting of the invention. In the drawings, like numbers refer to like elements.

The following description focuses on an embodiment of the present invention applicable to a vehicle for traversing terrain carrying a load, such as a person or goods. However, it will be appreciated that the invention is not limited to this application but may be applied to many other transport applications requiring smooth and even movement across transport surfaces of varying topography.

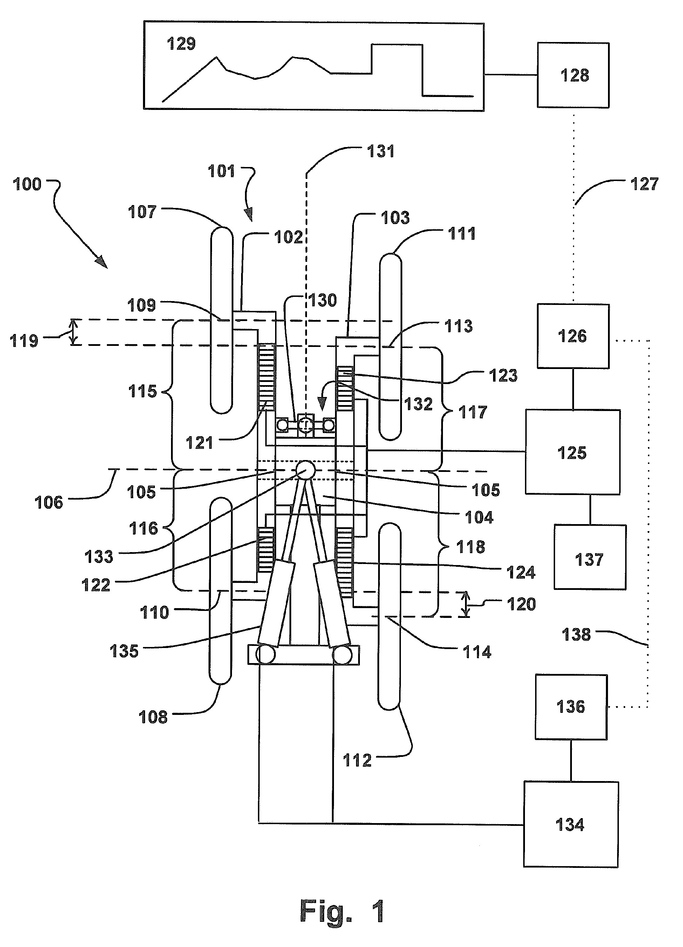

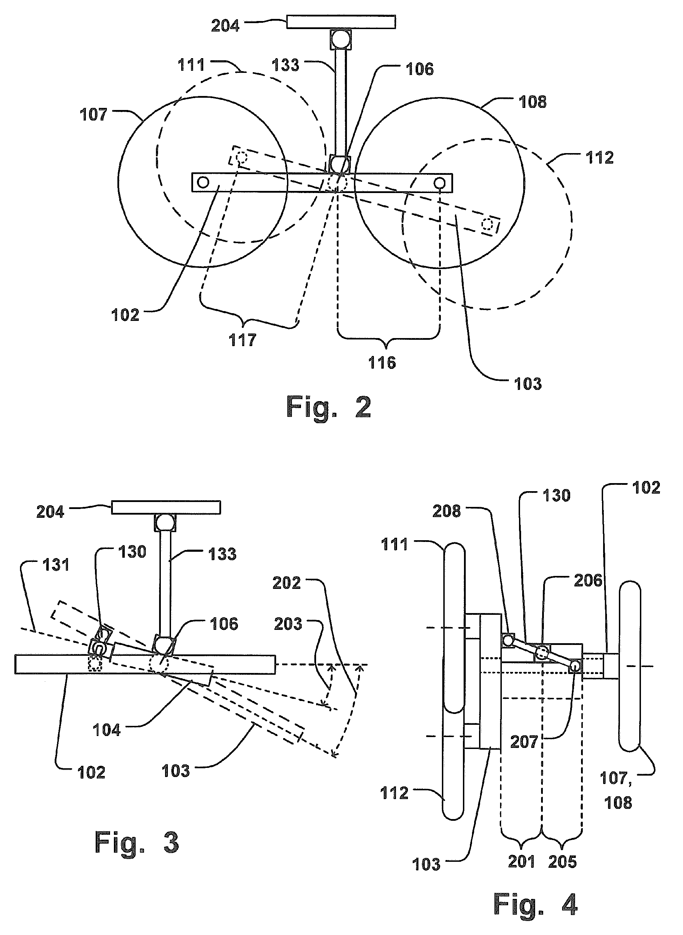

In Fig. 1, a vehicle 100 according to an embodiment of the invention is shown in a top view. The vehicle comprises a chassis 101 having a left frame 102, a right frame 103, and a base plate 104. The vehicle 100 includes a first level compensation system having a pivot joint 105 on either side of the base plate 104 for pivotably connecting the left and right frames, 102 and 103, to base plate 104 ( see also Fig. 2 and 3). The left and right frames, 102 and 103, are thereby rotatable with respect to each other around a common rotational axis 106 that extends trough the base plate 104. The left frame 102 may rotate clockwise (CW) while the right frame 103 is rotated counter-clockwise (CCW). The left and right frames, 102 and 103, extend substantially in a direction perpendicular to the rotational axis 106. The vehicle 100 has a left wheel pair comprising a left front (LF) wheel 107 and a left rear (LR) wheel 108, the LF wheel 107 and LR wheels 108 having left rotation axes, 109 and 110, respectively. The LF wheel 107 and LR wheel 108 are rotatably mounted in opposite end regions of the left frame 102. Likewise, the vehicle 100 has a right wheel pair including a right front (RF) wheel 111 and a right rear (RR) wheel 112, the RF wheel 111 and RR wheel 112 having right rotation axes, 113 and 114, respectively. The RF wheel 111 and RR wheel 112 are rotatably mounted in opposite end regions of the right frame 103.

At least one first axial distance, 115, 116, from a left rotation axis, 109, 110, of the left wheel pair to the rotational axis 106 is different from at least one second axial distance, 117, 118, from a right rotation axis, 113, 114, of the right wheel pair to the rotational axis 106. Accordingly, by having at least one first axial distance, 115, 116, that is longer or shorter than at least one second axial distance, 117, 118, the left and right wheel pair have at least one off-set, 119, 120, relative to each other. In Fig. 1 a frontmost first axial distance 115 is longer than a frontmost second axial distance 117, whereby LF wheel 107 has a left offset 119 to the RF wheel 111. Further, a rearmost first axial distance 116 is shorter than a rearmost second axial distance 118, whereby the RR wheel 114 has an right offset 120 to the LR wheel 108. The offsets 119 and 120 may be different from each other and any of wheels 107, 108, 111, and 112 may have an offset relative to one another.

The offsets, 119 and 120, are substantially in the direction of extension of the left and right frame, 102 and 103, which is substantially in the driving direction of the vehicle 100, such that when the vehicle 100 drives on a flat surface and approaches a vertical step, the frontmost wheel, i.e. LF wheel 107, having offset 119 approaches the vertical step before the LR wheel 111. By having an offset, 119, 120, the likelihood of total wheel contact with the transport surface of the vehicle is increased as the surface may contain irregularities such as holes, piles, or steps, that displace any of the wheels 107, 108, 111, or 112 in the vertical direction. For instance as the LF wheel 107 approaches an irregularity such as a vertical step, and becomes initially displaced, e.g. by loosing grip. Surface contact is however maintained thanks to the pivoting split frame. The RF wheel 111 trailing behind with offset 113 has not yet approached the step and maintains full contact and grip with the flat transportation surface before the step. The total amount of available traction is thereby increased and the available grip of the wheels not displaced in the vertical direction of the step may be sufficient to push the frontmost offset wheel over the step. Subsequently as the foremost wheel 107 traverses the obstacle it regains grip and traction and is able to pull the RF wheel 111, that is approaching the step and becomes displaced, over the same step. The amount of wheel contact is thereby increased at each instance in time when traversing such obstacles with offset wheels. At the same time energy consumption is reduced.

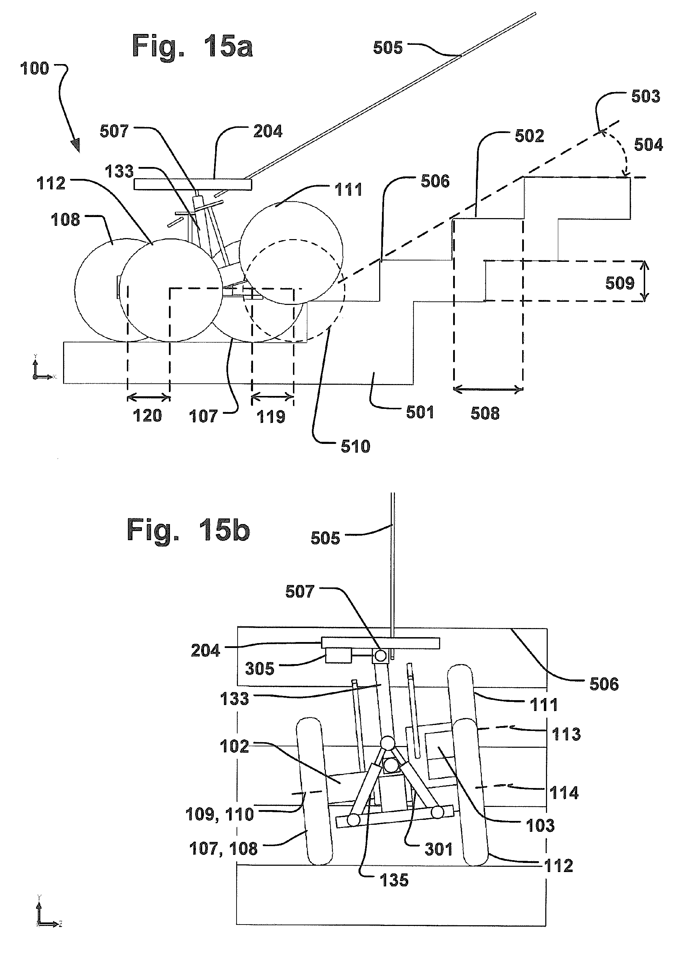

The pivoting action of the left and right frames, 102, 103, interplays with aforementioned offset configuration by alternating rotation of the left and right frames, 102, 103, to compensate for vertical displacement of any offset wheels 107, 108, 111, and 112. This compensation is to be construed as a first level compensation of a first level compensation system of the vehicle 100. Fig. 2 is a side view from the left of the vehicle 100 in Fig. 1, showing a selection of details of the vehicle 100 when right frame 103 is rotated CW with respect to left frame 102. Driving the vehicle 100 in a reverse direction corresponds to movement to the right of the vehicle in Fig. 2, e.g. when descending down an irregularity such as a hole in the transportation surface. The rearmost wheel, RR wheel 112 having aforementioned offset 120, approaches the hole, whereby the right frame 103 pivots CW to allow RR wheel 112 to approach a lowered contact surface in the descent. A loss of surface contact of RR wheel 112 is minimized if not avoided, while the horizontal left frame 102 allow the left wheel pair with LF and LR wheels, 107, 108, to stay in contact with the transportation surface to maximize grip and traction. A further example will be described in relation to Figs. 15a-j showing the interaction between the level compensation of the pivoting left and right frames, 102, 103, and the offset configuration of wheel pairs of the vehicle 100 when ascending a stair case.

The distance between left rotation axes, 109 and 110, may be the same as the distance between right rotation axes, 113 and 114. Accordingly the front first axial distance 115 may be the same as the rear second axial distance 118, and the rear first axial distance 116 may be the same as the front second axial distance 117. The front offset 119 is in this case substantially equal to the rear offset 120. The symmetric offset configuration may provide an increased stability and smooth ride when traversing a symmetric surface topography, such as a stair.

The vehicle 100 may comprise at least one wheel displacement unit, 121, 122, 123 and 124, arranged to displace the LF wheel 107 in relation to the RF wheel 111, and/or the RF wheel 111 in relation to the LF wheel 107, and/or the LR wheel 108 in relation to the RR wheel 112, and/or the RR wheel 112 in relation to the LR wheel 108. In the embodiment in Fig. 4, four wheel displacement units 121, 122, 123 and 124 are shown. It may be sufficient to have only one wheel displacement unit that displaces the left or right wheel pair in relation to each other. By displacing at least one of the LF wheel 107 and LR wheel 108 in relation to at least one of the RF wheel 111 and RR wheel 112 the offset, 119, 120, may be adjusted to fit the topography of the transportation surface. If traversing two different series of obstacles, such as two series of steps, where the step dimensions are different relative to each other, a larger offset may be more suitable for the series of steps with larger step dimensions, and likewise a smaller offset may be more suitable for the smaller steps.

The vehicle 100 may comprise a frame control unit 125 adapted to provide off-set values, wherein the wheel displacement unit comprises left frame actuators, 121, 122, and right frame actuators 123, 124. The left and right frame actuators, 121, 122, 123, 124, are operatively connected to the frame control unit 125. The left frame actuators 121, 122, are arranged to adjust at least one of the first axial distances 115, 116, by displacement of the wheels 107, 108, of the left wheel pair relative to each other. Likewise, the right frame actuators 123, 124, are arranged to adjust at least one of the second axial distances 117, 118, by displacement of the wheels 111, 112, of the right wheel pair relative to each other. The displacements are based on the off-set values provided by the frame control unit 125 to provide the offset 119, 120. The frame actuators 121, 122, 123, 124, may be linear actuator elements capable of expanding or contracting in dimension, in the direction of the extension of the left and right frames 102, 103, to provide the offset 119, 120 in the driving direction of the vehicle.

The linear actuator elements may be based on hydraulic, electrical, and mechanical operation, or any combination thereof. The control unit 125 communicates with the frame actuators 121, 122, 123, 124 and provides offset values depending on which offset 119, 120, of the wheels 107, 108, 111, 112, that is desired to fit the current topography of the transportation surface.

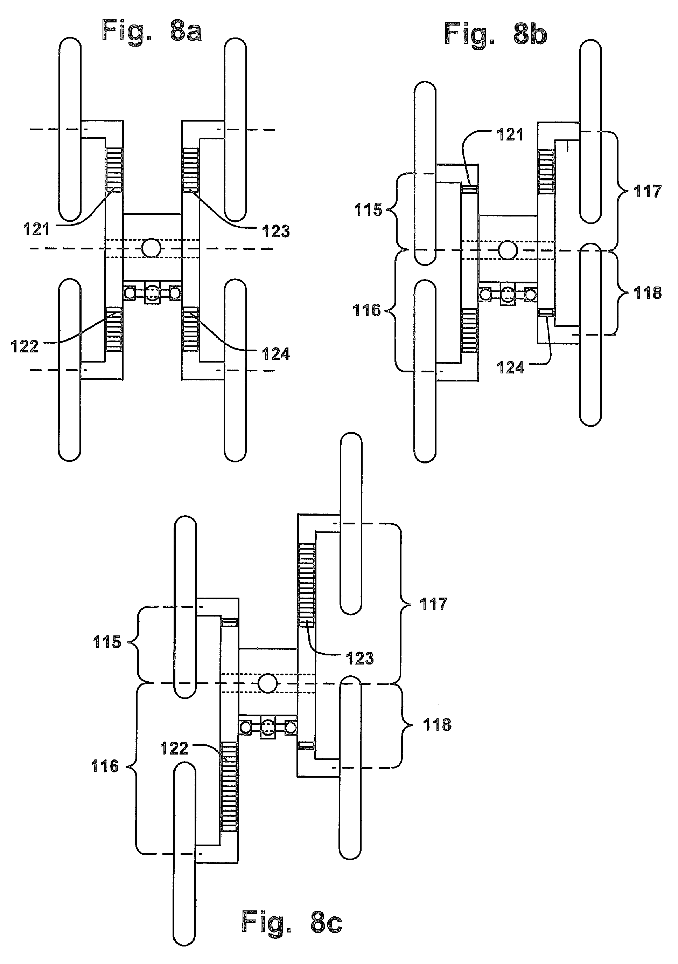

Fig. 8a-c show different configurations of the left and right frames 102, 103. Fig. 8a show the vehicle 100 without any offset of the wheels 107, 108, 111, 112. This example of a configuration may be suitable for transportation on certain surfaces that do not benefit from the wheel offset. In Fig. 8b left frame actuator 121 and right frame actuator 124 are contracted, whereby the first axial distance 115 and second axial distance 118 has decreased in length. In Fig. 8c left frame actuators 122 and right frame actuator 123 are expanded, whereby the first axial distance 122 and second axial distance 123 has expanded in length. Other offset configurations may readily be apparent to the skilled person when reading the present disclosure.

The off-set values provided to the frame actuators 121, 122, 123, and 124, by the frame control unit 125 may be set according to a plurality of pre-defined values defined by a vehicle user. For example, the vehicle user may define offset values at 80 mm and 160 mm in the frame control unit 125. The frame control unit 125 sends these values to the frame actuators, that displace at least one of the wheels 107, 108, 111, and 112 such that an front offset 119 or rear offset 120 (e.g. at the example of 80 mm or 160 mm) is set. This is advantageous as the user may travel across a number of reoccurring surfaces during a day. E.g. stairs of different dimensions, or country roads with pot holes. The surface may have different optimized settings of the offset 119, 120, that can be pre-set and subsequently quickly selected by the user when approaching these different surfaces.

In some embodiments the vehicle 100 comprises a transport surface detection unit 126 operatively connected to the frame control unit 125, and a data memory 137 operatively connected to the frame control unit 125. The transport surface detection unit 126 provides topographical information of the vehicle transport surface to the frame control unit 125. The off-set values sent to the frame actuators 121, 122, 123, 124, are based on this topographical information. The topographical information comprises dimensional data elements of the transportation surface and may be stored on the data memory 137. For example, the detection unit 126 may detect a vertical edge 200 mm above the transportation surface ahead of the vehicle 100 and return this dimensional data to the frame control unit 125 where it can be stored on the memory 137. A plurality of dimensional data elements may be stored on the memory 137 in case the detection unit 126 detect several edges of different dimensions. The frame control unit may compute suitable offset values based on this dimensional data according to a pre-stored algorithm or a look-up table for translating the dimensional data to offset values for setting an offset 119, 120 that is suitable for the topography dimensions. The surface detection unit 126 may provide the topography data automatically such that no input has to be made by the vehicle user, and no pre-selection of offset values has to be made.

The surface detection unit 126 may comprise a receiver adapted to receive the dimensional data elements over a communication link 127, that may be a wireless communication link. The dimensional data may be stored on a terrain memory 129 connected to a transmitter 128 located for example in the proximity of an obstacle, such as a staircase. The terrain memory 129 may pre-store the dimensional data of the current stair that is approached by the vehicle user, and the transmitter 128 may subsequently transmit the information to the receiver in the surface detection unit 126 of the vehicle 100 over the communication link 127. The suitable offset 119, 120 can then be set depending on the dimensions of the staircase, which can be made without the need for a new analysis of the topography.

The communication over link 127 may be based on electromagnetic communication such as rfid, bluetooth, GSM, WIFI, infrared light, or acoustic communication, or any other technique allowing for wireless communication. Accordingly the transport surface detection unit 126 may comprise a sensor such as an optical sensor, and/or a photographic sensor, and/or an electromagnetic sensor such as an rfid sensor, and/or an acoustic sensor. The transport surface detection unit 126 may also comprise a distance measurement unit such as an optical topography scanner unit, a radar unit, or a laser measurement unit that can measure the dimensions of for example a stair case, such as the step dimensions. Any other technique for measuring the topography may be used for providing the dimensional data to the frame control unit 125. The vehicle 100 may have a GPS unit (not shown) for receiving information about the topography at the current coordinates and adjust the offset 119, 120 accordingly. The vehicle 100 may comprise a terrain recorder (not shown) adapted to store topography information based on the movement of the wheels and left and right frames of the vehicle. For instance, the vehicle user may force an obstacle such as a staircase, and the dimensions of the steps will be recorded by the terrain recorder, whereby the next time the same staircase is to be traversed, the offset 119, 120, is optimized according to the recorded dimensional data in the recorded information.

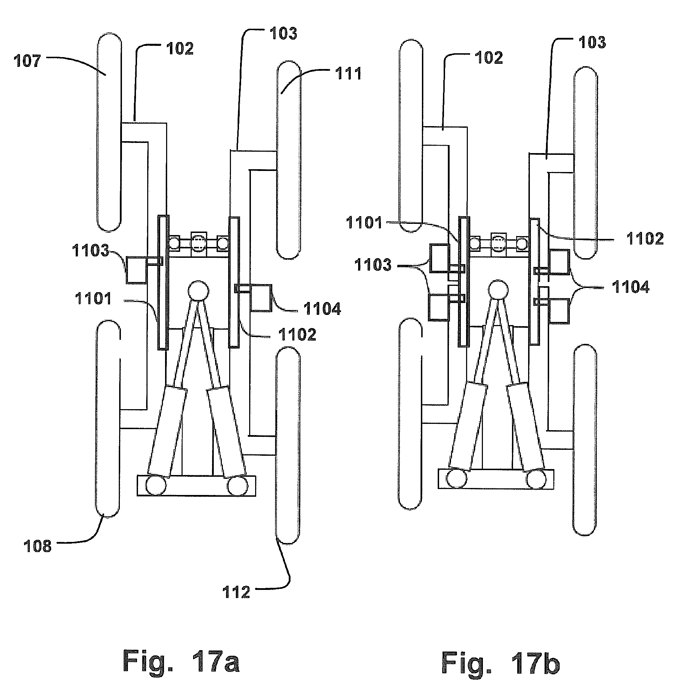

Figs. 17a-b shows another embodiment for allowing adjustment of the offset 119, 120. At least one of the left and right frames 102, 103, comprises a at least one locking unit 1103, 1104, and at least one slidable member 1101, 1102 arranged to provide sliding movement between at least one of the left and right frames 102, 103, and the base plate 104. Whereby at least one of the LF wheel and LR wheel may be displaced in relation to at least one of the RF wheel and RR wheel. The at least one locking unit 1103, 1104 is arranged to fix the position of at least one of the left and right frames 102, 103, in relation to the base plate 104. This provides the possibility to adjust the offset 119, 120, easily by unlocking the left and right frames 102, 103, by the locking unit 1103, 1104, and for example brake the left wheels 107, 108, and drive forward with right wheels 111, 112, for example by 80 mm, thus the wheels are used as wheel displacement units such that the offset 119, 120 is changed to 80 mm. Then locking unit 1103, 1104 locks the left and right frames 102, 103, such that they do not slide by the sliding member 1101, 1102, and are fixed in relation to each other again. The left wheels 107, 108 may also drive in reverse by 40 mm, and the right wheel drive forward by 40 mm when the left and right frames 102, 103, are unlocked in order to provide the same 80 mm offset. The movement of the left and right frames 102, 103, in relation to each other and in relation to the base plate 104 is possible due to the slidable member 1101, 1102.

As seen in Fig. 17b, each wheel may have a locking unit 1103, 1104. In this case the left and right frames 102, 103, each have a front and rear part that can be moved in relation to each other, as in the case where the left and right frames 102, 103, have frame actuators 121, 122, 123, 124. For instance, only RF wheel 111 may be offset by unlocking the front part of the right frame 103, and brake the other wheels and drive forward with RF wheel 111 such that the desired offset 119 is obtained, and then lock the frame again by the locking unit.

The slidable members 1101, 1102 are preferably arranged such that common rotation axis 106 can may be maintained regardless of the relative movement of left and right frames 102, 103, and base plate 104.

The first level compensation system of the vehicle 100 may comprise a base plate levelling unit 132 arranged to reduce a rotational movement of the base plate around rotational axis 106 upon rotation of the left and right frames, 102 and 103, around the same rotational axis 106. The base plate 104 may be used as a base for mounting a drivers seat to the vehicle 100. Reducing the movement of the base plate 104 when for example traversing a stair case or any other terrain that induce alternating CW and CCW rotational movement of left and right frames 102, 103, provides a more stable and smooth ride. The levelling unit 132 also functions to stabilize the base plate 104 by having the function as a structural support that prevents uncontrollable rotation of the base plate 104 around rotational axis 106.

As seen in Fig. 1, 3 and 4, the base plate levelling unit 132 may comprise a base linkage 130 pivotably connected to the base plate 104 by central pivot joint 206 at a center distance, 201, 205, c.f. Fig. 4, between the left and right frames, 102, 103. The base linkage 130 is thereby rotatable with respect to the base plate 104 around a pivot axis 131 which is perpendicular to the rotational axis 106, c.f. Fig. 1. In Fig. 4, showing a view from the left of Fig. 3, the ends of the base linkage 130 are pivotably connected to the left frame 102 by pivot joint 207 and likewise pivotably connected to the right frame 103 by pivot joint 208. The pivot joints 206, 207, and 208 may be spherical bearings that allow pivoting of the base linkage 130 in three dimensions. The base linkage 130 may slide freely trough the central pivot joint 206 to allow for translational movement of the base linkage 130 in a direction perpendicular to the pivot axis 131. The spherical bearing of the central pivot joint 206 may in this case have a hole trough the centre to accommodate the base linkage 130.

In Fig. 3 a side view from the left of the vehicle 100 in Fig. 1 is shown, where details of the base plate 104, left and right frames 102, 103, and base linkage 130 are shown. Upon a rotation of the left and right frames 102, 103, around the rotational axis 106 the right frame 103 will have a first angular displacement 202 in relation to the left frame 102, and the base plate 104 will have a second angular displacement 203 in relation to one of the left and right frames 102, 103. Due to the position of the connection of the base linkage 130 to the base plate 104 by the pivot joint 206, between the left and right frames 102, 103, the second angular displacement 203 is less than the first angular displacement 202.

With reference to Fig. 4, if the distances 201 and 205 are equal the second angular displacement 203 of the base plate 104 will be substantially half of the first angular displacement 202. The base plate 104 will accordingly only be displaced the half amount compared to the left and right frames 102, 103, and will at the same be stabilized by the base linkage 130. The base linkage 130 may be close to the rotational axis 106 to allow a larger rotation angle of left and right frames 102, 103 about the rotational axis 106.

The base plate levelling unit may comprise other means for stabilizing and reducing motion of the base plate 104. A resilient member (not shown) such as a spring or elastic polymer may be used to connect the base plate 104 with left and right frames 102, 103 in a similar configuration as the base linkage 130 such that rotation of left and right frames 102, 103, stretch or relax the resilient member while the base plate is kept at half the displacement angle of the left and right frames 102, 103. The base linkage 130 may also comprise a resilient or expandable portion for allowing an increased rotational angle between left and right frames 102, 103.

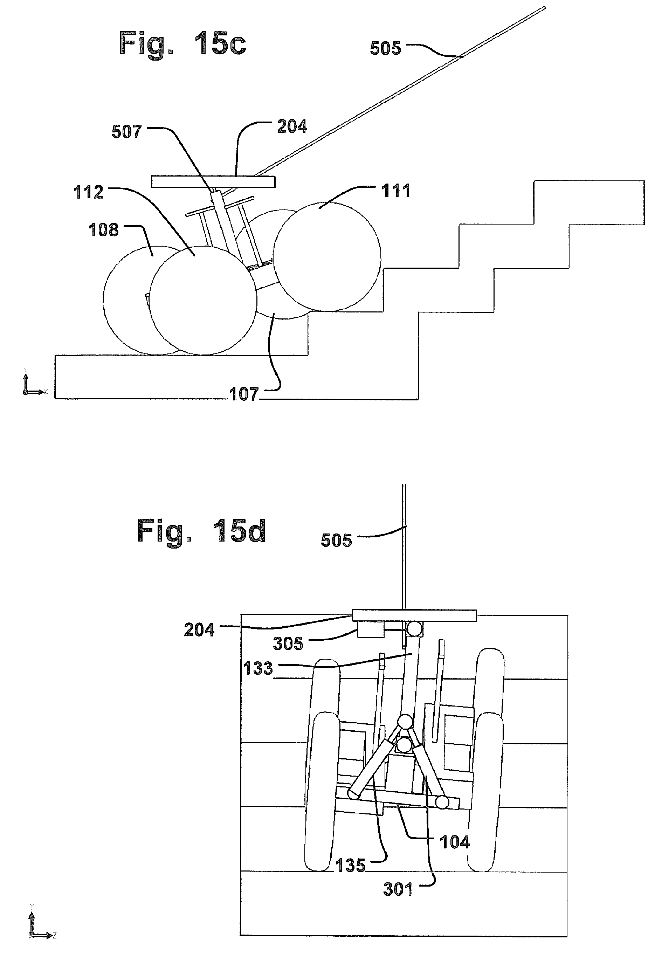

Figs. 15a-j show the vehicle 100 from a side and rear view when traversing a stair case 501 in a number of sequences. Fig. 15a and Fig. 15b show the same position of the vehicle 100, and likewise for the remaining Fig. 15c-j. With reference to Fig. 15a, the stair case has a plurality of steps 502, which defines a first direction 503 of the stair case 501 at a stair angle 504 in which the vehicle 100 traverse. The stair case 501 has an axis of inclination 505 which is parallel to the first direction 505 and perpendicular to step edges 506. The step edge 506 is to be construed as the substantially horizontal line that trails the edge 506 of each step 502. The axis of inclination 505 is a reference axis that is fixed in space in relation to the stair case 501.

The vehicle 100 has an apex point 507 adjacent to a seat foundation 204, and left and right wheel pairs having wheels 107, 108, 111, 112 connected to left and right frames 102, 103. The position of the apex point 507 is fixed in relation to the vehicle 100. The left and right frames 102, 103 are rotatable with respect to each other around rotation axis 106 as previously described. The dashed wheel outline 510 in Fig. 15a is for clarifying the offset 119 before the right frame 103 has rotated in the CCW direction.

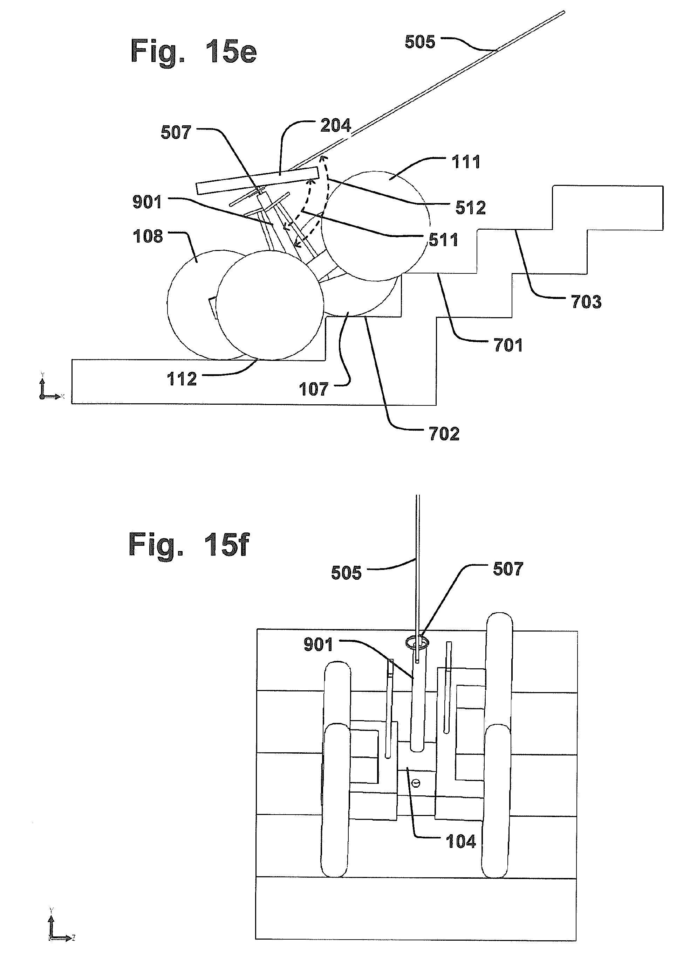

When traversing the stair case 501 the wheel off-set 119, 120 of at least one wheel of the vehicle 100 is adjusted based on step dimensions 508, 509. In Fig. 15a-j the offset 119 of the RF wheel 111 is substantially equal to offset 120 of the RR wheel 112. Subsequently, Fig. 15a-j shows the vehicle 100 driving in the first direction 503. The apex point 507 is maintained along the axis of inclination 505 during the traversing as a first level compensation of the first level compensation system is applied by alternating rotational movement of the left and right frames 102, 103. This is particularly shown with reference to Fig. 15e-j where initial asymmetry in the motion of the ascent is absent. In Fig. 15a-d the front wheels 107 and 111 surmount the first step which cause the apex point 507 to displace from the axis of inclination 505. This displacement may be corrected by applying level compensation of a second level compensation system as will be described further below.

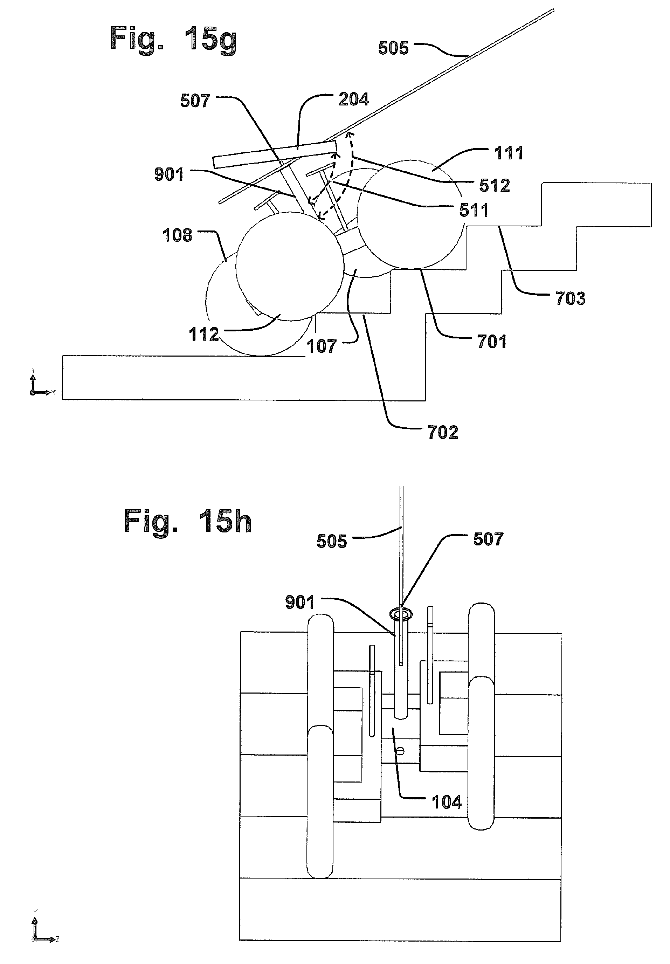

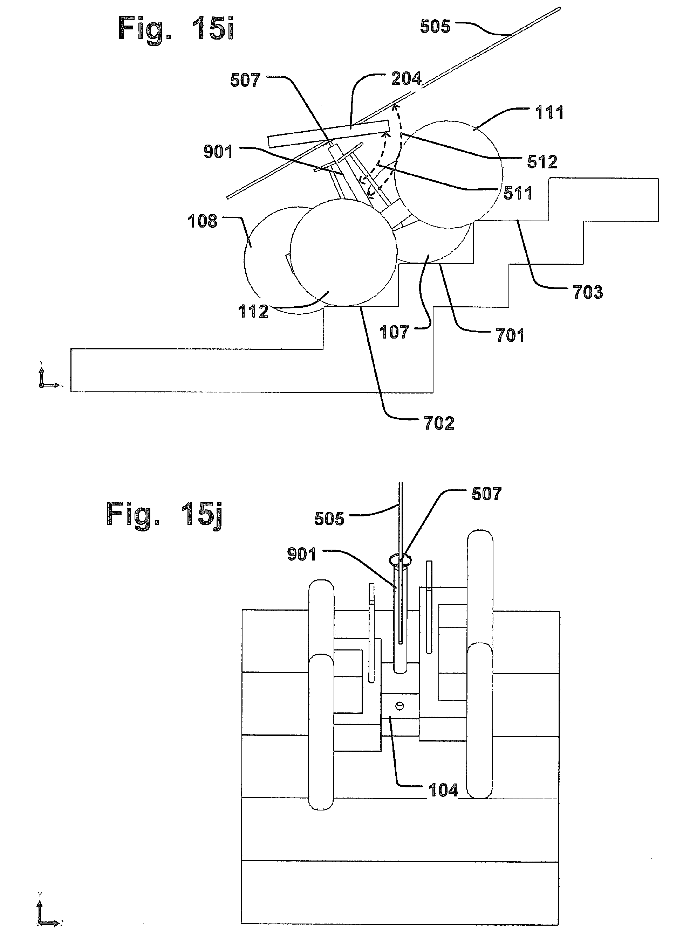

The seat foundation 204 is not shown in Fig. 15f, 15h, and 15j, in order to show movement of the apex point 507 more clearly.

Fig. 15e shows a partial surmounting of a middle step 701 with the right frontmost wheel of the right wheel pair, RF wheel 111. The RF wheel 111 has offset 119 in relation to LF wheel 107. Right frame 103 rotates CCW as RF wheel 111 partial surmounts middle step 701. The apex point 507 is at the axis of inclination 505. Due to the offset 119, 120, wheels 107, 108, 112 have full surface contact and provide sufficient traction for the next movement over steps 502.

The following movement in the sequence is displayed in Fig. 15g showing a partial surmounting of the middle step 701 with the LF wheel 107, whereby left frame 102 rotates CCW. Simultaneously the frontmost wheel 111 fully surmounts the middle step 701, and the RR wheel 112 of the right wheel pair partially surmounts a lower step 702 below the middle step 701, whereby the right frame 103 rotates CW. In the movement wheel 111 regains full surface contact and traction while LF wheel 107 loose the same. The apex point 507 is maintained at the axis of inclination 505.

Fig. 15i shows a partial surmounting of an upper step 703 above the middle step 701 with the frontmost wheel 111, whereby the LF wheel 107 fully surmounts the middle step 701 and regains grip. As the right frame 103 rotates CCW left frame 102 rotates CW. Simultaneously the RR wheel 112 fully surmounts the lower step 702, and the left rearmost wheel of the left wheel pair, LR wheel 108, partially surmounts the lower step 702. By having an offset 120 RR wheel 112 regains full surface contact and traction when LR rearmost wheel 108 looses surface contact, and likewise for LF wheel 107 and RF wheel 111. The apex point 507 is still maintained at the axis of inclination 505, and will continue to be maintained at this axis as the vehicle 100 traverses subsequent steps 502, with a constant angle 512 between support 901 and axis 505. The seat foundation 204 in Figs. 15e, 15g, and 15j may accordingly be kept at a constant angle in relation to axis 505 if having a fixed angle 511 in relation to the apex point 507 or support 901. It is thus possible to achieve a smooth and safe ascent of the staircase 501 without varying the position of the seat foundation 204. This is due to the level compensation of the first level compensation system wherein left and right frames 102, 103, pivot alternating according to the alternating contact with steps 502 by the offset wheel 107, 108, 111, 112, and wherein the base linkage 120 keeps the base plate 104 at a constant angle due to the symmetry of the CW and CCW rotations of the left and right frames 102, 103.

The staircase 501 has steps of constant dimensions 508, 509. The seat foundation 204 may in this case be at a fixed angle 511 in relation to the base plate 104 by a support 901, seen in Fig. 15e-j. As the angle 512 between support 901 or base plate 104 and the axis of inclination 505 is kept substantially constant in the ascent in Fig. 15e-j, the seat foundation 204 will also be kept at a substantially constant angle with respect to the same axis of inclination 505. is kept In varying topography the angle of the seat foundation 204 may vary, which may be corrected by a second level compensation system, where the seat foundation 204 has a pivotable support 133 that may be displaced in space, as described further below. In the case of another staircase having other constant dimensions 508, 509, the offset 119, 120 may be adjusted by the frame control unit 125 and frame actuators 121, 122, 123, 124, such that a constant angle of the seat foundation is achieved once again during ascent, or descent.

The vehicle 100 may comprise a second level compensation system arranged for orientation of the seat foundation 204 in space to maintain a level plane of the seat foundation 204 in use of the vehicle 100. This provides for a smooth ride even when the transportation surface is very rough.

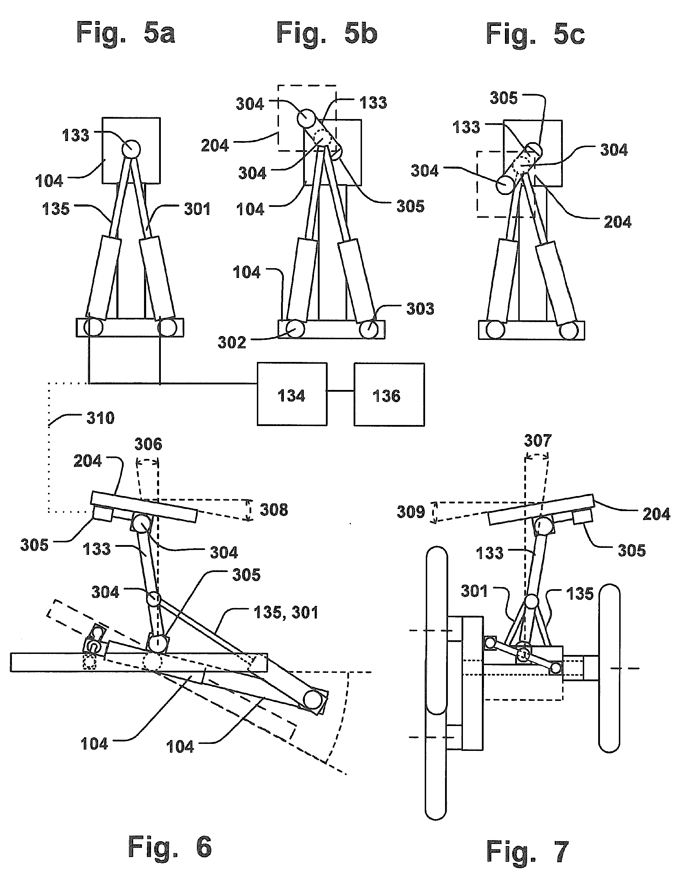

With reference to Fig. 6, which is a side view from the left of the vehicle in Fig. 1, showing details of the second level compensation system, the second level compensation system comprises in an embodiment a pivotable support 133 connecting the seat foundation 204 with the base plate 104 via upper and lower support pivot joints 304, and 305, respectively. Alternative means for providing a level plane of the seat foundation 204 may be used, such as the level compensation unit disclosed in patent application PCT/SE2009/051290, which is incorporated in its entirety herein. Advantages of having a pivotable support 133 is a more compact level compensation construction, the use of less components, and a quicker control.

Figs. 5a-c show a detail of the vehicle 100 in Fig. 1. The second level compensation system may comprise a support control unit 134 connected to a level detection unit 136 that is adapted to provide levelling information to the support control unit 134. The second level compensation system further comprises at least one support actuator 135, 301 connected to the support control unit 134 and arranged to displace the pivotable support 133 according to the levelling information. Figs. 5b-c show displacements of the seat foundation 204 to upper left and lower left positions, respectively. Fig. 6, which is a side view from the left of Fig. 5b, shows the displacement at an angle 306 from a vertical plane. Fig. 7 which is a view from the front of Fig. 5c, or from the left of Fig. 6, shows the displacement at an angle 307 from a vertical plane. Hence, the support 133 may be displaced in any direction to compensate for variations in inclination of the topography, such that the seat foundation can be moved to desired positions. The centre of gravity of the vehicle when supporting a load, for example when a person is positioned at the seat foundation, can be adjusted accordingly to avoid that the vehicle 100 falls over in any direction. For example, the support 133 may be tilted forwards in the driving direction when ascending up a staircase to avoid falling backwards.

The angles of the seat foundation, 308 and 309, with respect to a horizontal plane may be controlled according to embodiments described below.

The level detection unit 136 may be any unit capable of detecting level variations, e.g. angles of slope or tilt, elevation or inclination such as a gyroscope or inclinometer. According to Fig. 1, the level detection unit 136 may also receive information from the surface detection unit 126 over communication link 138. Information about the topography of the transport surface such as dimensional information, for example the dimensions of a stair case 501, may accordingly be used to automatically adjust the angles 306, 307 of the support 133 before the start of the ascent of the stair case 501. Likewise information of the current inclination of the vehicle may be sent from the level detection unit 136 over communication link 138 to the surface detection unit 126. The offset 119, 120 may accordingly be adjusted by the frame control unit 125 and frame actuators 121, 122, 123, 124 to comply with the current inclination. For example, for a terrain with steep slopes, the offset 119, 120 may be increased such that the distance between the frontmost wheel and rearmost wheel is increased whereby the centre of gravity can be maintained within the critical range and the vehicle 100 does not fall over.

In the current embodiments, the vehicle 100 comprises a first and second support actuator 135, 301 pivotably mounted to the base plate 104 at displaced first and second joints 302, 303, c.f. Fig. 5b. The support actuators 135, 301 are further pivotably mounted to the pivotable support at a third joint 304, c.f. Fig. 5b and Fig. 6. The base plate 104 extends in the rear direction such that an appropriate distance between the first and second joints 302, 303, and the third joint 304 is obtained. The third joint 304 may be a common joint for first and second support actuators 135, 301, such that the distance between the attachment point of the pivotable support 133 of the first support actuator 135 to the attachment point of the pivotable support 133 of the second support actuator 301 is as small as possible. This minimizes the momentum exerted by the first and second support actuators 135, 301 on the attachment point at the third joint 304 and a more durable construction is obtained. The payload of the seat foundation 204 is preferably carried by the pivotable support 133.

Fig. 6 shows an embodiment of a detail of the vehicle 100 from the left side of Fig. 1. Fig. 7 shows the same embodiment from the left of Fig. 6.

The seat foundation 204 may be connected to a seat actuator 305. As shown in Fig. 6 and Fig. 7, the seat actuator 305 is connected to the level detection unit 136 by communication link 310 and is arranged to displace the seat foundation 204 in accordance with the levelling information to maintain a level plane of the seat foundation 204. In Fig. 6 and 7 the seat foundation is rotated at an angle, 308 and 309, respectively. The seat actuator 305 may be hydraulic, and/or electrical, and/or mechanical and may be fixed to the seat foundation 204 or the pivotable support 133. The upper support pivot joint 304 may allow movement of the seat foundation 204 in any direction.

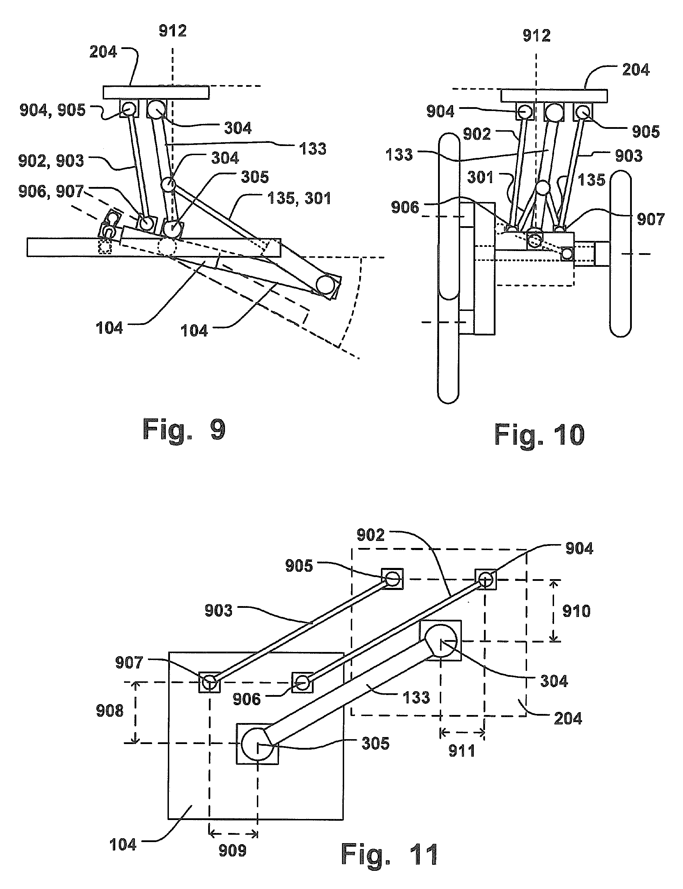

Fig. 9 shows an embodiment of a detail of the vehicle 100 from the left side of Fig. 1. Fig. 10 shows the same embodiment from the left of Fig. 9.

The second level compensation system may comprise side struts 902, 903, pivotably connected to the seat foundation 204 and to the base plate 104 at either side of the pivotable support 133. The side struts 902, 903, are pivotably connected to the seat foundation 204 by upper strut pivot joints 904, 905, and pivotably connected to the base plate 104 by lower strut pivot joints 906, 907.

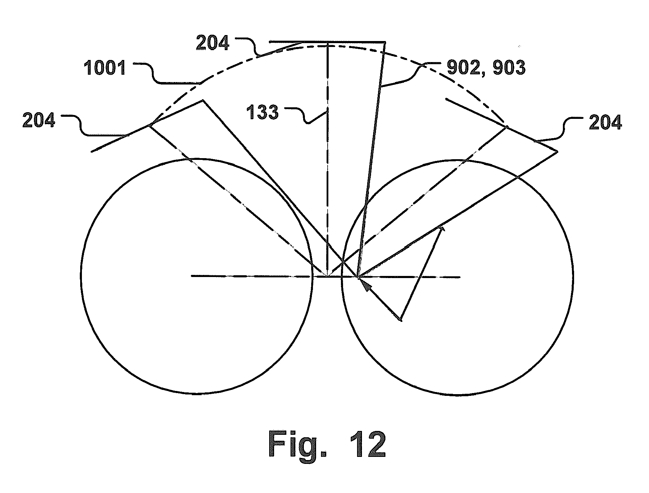

Fig. 11 is a top view of Fig. 9 or 10 showing the seat foundation 204 as displaced in relation to base plate 104. The upper strut pivot joints 904, 905, and the upper support pivot joint 304 are arranged in a displaced triangular configuration 910, 911, at the seat foundation. Likewise the lower strut pivot joints 906, 907, and the lower support pivot joint 305 are arranged in a displaced triangular configuration at the base plate 104, with displacements 908, 909. the As seen in Fig. 9 and Fig. 10 the seat foundation 204 is kept at a level horizontal plane by the side struts 902, 903, as the pivotable support 133 is displaced with respect to a vertical axis 912. The length of the side struts 902, 903, and the displacements 908, 909, 910, 911 of strut pivot joints 904, 905, 906, 907, cause the seat foundation 204 to move in a level plane across a bow shaped path 1001, as seen in Fig. 12, showing a schematic illustration of movement of the pivotable support 133 with side struts 902, 903, from a side view of the vehicle 100. In the embodiment shown in Fig. 12 the angle of the seat foundation 204 with respect to a horizontal plane changes at the extreme left and right positions of the path 1001 due to the geometric configuration of the side struts 902, 903.

The side struts 902, 903 provides stabilization of the seat foundation 204 and can be configured by changing their geometrical properties, such as strut length, and placement of strut pivot joints 904, 905, 906, 907, to provide a desired path 1001 of travel of the seat foundation 204, and the range of angular displacement allowable for the seat foundation 204 when displaced by pivotable support 133. The triangular configuration 910, 911 may be particularly advantageous for providing stability, level compensation and support for the seat foundation 204 during movement of the pivotable support 133 across the bow shaped path 1001 in three dimensional space, thereby essentially describing a path of movement 1001 on the surface of an sphere.

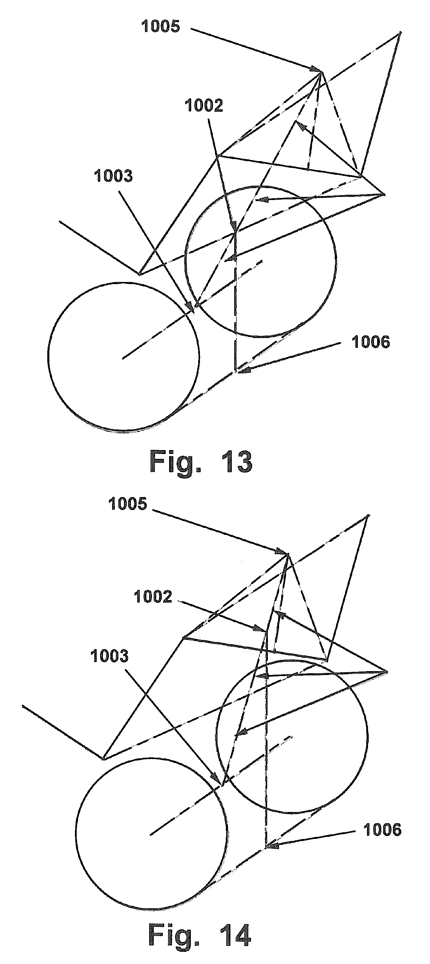

By configuring the side struts 902, 903, such that the path 1001 becomes substantially bow-shaped the position of the total mass centre can be easily adjusted. Fig. 13 and 14 show the vehicle mass centre 1003, the passenger mass centre 1005, which result in a the total mass centre 1002. By the geometrical configuration of the side struts 902, 903, in the current embodiment the vertical axis from the total mass centre is placed in a central position 1006 between the wheels. This provides an even distribution of the weight on all of the wheels independent of the tilt of the vehicle 100, improving grip, traction and safety. Fig. 13 and 14 show different positions of the total mass centre 1002. For example in Fig. 13 the weight of the passenger may be substantially half of the weight of the vehicle 100, and in Fig. 14 the weight of the passenger may be substantially double the weight of the vehicle 100.

The pivotable support 133 receives the load of the seat foundation 204 together with its payload, whereas the side struts 902, 903 are relieved from the load and function to control the path of movement and angle of the seat foundation 204 according to the above.

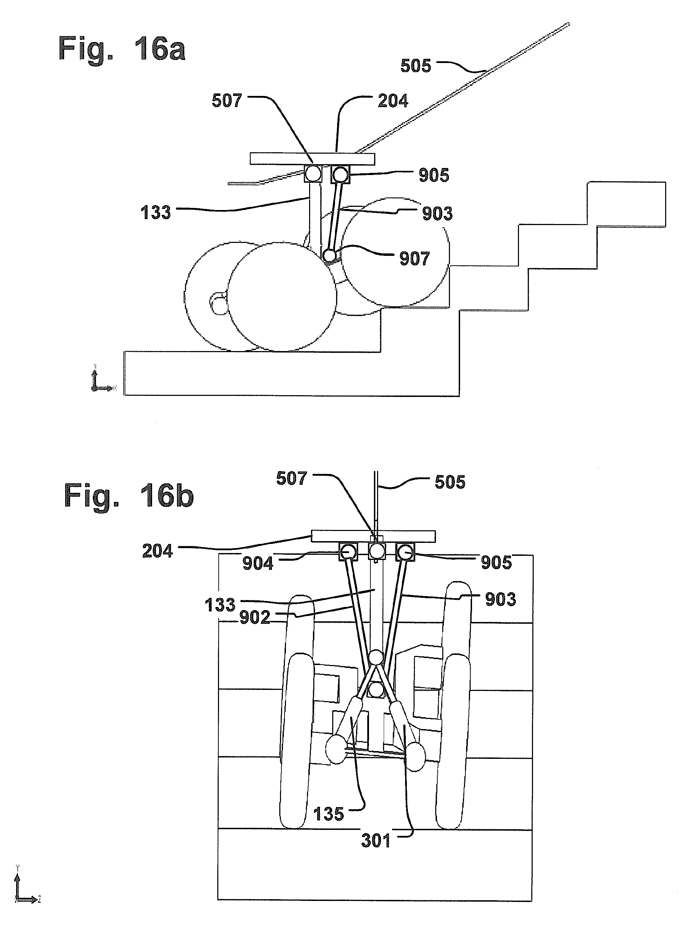

Returning to Figs. 15a-d showing the vehicle 100 traversing staircase 501, the second level compensation of the second level compensation system is applied to keep the seat foundation 204 at the desired position in the beginning of the ascent when surmounting the first step cause the vehicle 100 to tilt from side to side. In Fig. 15b the level detection unit 136 may detect that the vehicle tilts to the left and the pivotable support 133 may be displaced by support actuators 135, 305, to correct for the tilt angle such that the seat foundation 204 is kept on a level plane. In addition or alternatively, the seat actuator 305 and/or side struts 902, 903, tilts the seat foundation 204 such that a level plane is maintained. Correspondingly, in Fig. 15d the vehicle tilts to the right and support actuators 135 and 301, and/or seat actuator 305 may correct the level of the seat foundation 204. In Figs. 15b and 15d the main correction of the level of the seat foundation 204 is done by adjusting the seat foundation angle 308, 309, by seat actuator 305, without displacing the support actuators 135, 301. Fig. 16a-b, which shows the same position of the vehicle 100 as Fig. 15c-d, the embodiment with side struts 902, 903, is shown. Here the support actuators 135, 301, displace the pivotable support 133 such that it is aligned in a vertical line. Simultaneously, the side struts 902, 903, keeps the seat foundation 204 at the desired angle, which may be substantially in a horizontal plane.

The support actuators 135 and 305, and/or seat actuator 305, may be locked at a pre-defined threshold value of swaying (e.g. calculated by level detection unit 136) in case certain unevenness is accepted. This may save energy as these actuators do not have to be operated. The side struts are however a passive mechanical level compensation and thereby energy saving from start.

In addition the support actuators 135 and 305 may displace the pivot support 133 in the forward direction to move the centre of gravity forward to improve stability of the vehicle 100, and thereby safety of the vehicle user.

In Fig. 15a and 15c the support actuators 135, 305, seat actuator 305, and side struts 902, 903, respectively are not show.

Figs. 15e-j show the embodiment of the vehicle 100 where a fixed support 901 joins the seat foundation 204 with the base plate 104, in order to show the sufficient level compensation of the first level compensation system to keep the seat foundation 204 at a constant angle when traversing a symmetric series of steps. Symmetric is to be construed as the steps having constant dimensions and that an initial surmounting of a first step or last step of a series of steps is completed. Further, the seat angle may be kept at a substantially constant angle also for a series of steps that have varying dimensions. In this case the offset 119, 120 may be adjusted during the ascent, for example by manual adjustment or automatic adjustment according to dimensional data in terrain memory 129 and data memory 137 of the vehicle 100.

The support actuators 135, 301, are not shown in Fig. 15e-j but may be used together with a pivotable support 133 in order to correct for the centre of gravity position.

In the embodiment in Fig. 1 the vehicle 100 has four wheels. The vehicle 100 may have a reduced or increased number of wheels.

The wheels 107, 108, 111, and 112 may each have a electric motor drive integrated into each wheel. This provides for a compact construction and the four wheel drive ensures good traction for each wheel. The wheels 107, 108, 111, and 112 may have ribbed tyres to enhance the grip on the transportation surface. Ribbed tyres may in particular be advantageous when climbing stairs as the stair edge provides a good mating surface for torque transfer and propulsion of the vehicle across the stair.

In embodiments the wheel diameter is preferably at least as large as the step height 509. The diameter of the wheels may be in the range 10 - 50 cm.

As will be appreciated by one of skill in the art, the present invention may be embodied as device, system, or method.

The present invention has been described above with reference to specific embodiments. However, other embodiments than the above described are equally possible within the scope of the invention. Different method steps than those described above, may be provided within the scope of the invention. The different features and steps of the invention may be combined in other combinations than those described. The scope of the invention is only limited by the appended patent claims.

## Claims

1. A vehicle (100) having a multiple of level compensation systems, said vehicle comprising
a chassi (101) having a left frame (102), a right frame (103) and a base plate (104),
a first level compensation system comprising a pivot joint (105) for pivotably connecting said left and right frames to said base plate, whereby said left and right frames are rotatable with respect to each other around a common rotational axis (106), wherein said left and right frame extends in a direction perpendicular to said rotational axis,
a left wheel pair comprising a left front wheel (107) and a left rear wheel (108), the left front wheel and left rear wheels having left rotation axes (109, 110) and being mounted in opposite ends of said left frame,
a right wheel pair comprising a right front wheel (111) and a right rear wheel (112), the right front wheel and right rear wheels having right rotation axes (113, 114) and being mounted in opposite ends of said right frame,
wherein at least one first axial distance (115, 116) from a left rotation axis of said left wheel pair to said rotational axis is different from at least one second axial distance (117, 118) from a right rotation axis of said right wheel pair to said rotational axis, such that said left and right wheel pair have at least one off-set (119, 120) to each other.

2. Vehicle according to claim 1, comprising at least one wheel displacement unit (121, 122, 123, 124) arranged to displace at least one of said left front wheel and left rear wheel in relation to at least one of said right front wheel and right rear wheel, and/or wherein the distance between left rotation axes is same as the distance between right rotation axes, and/or wherein at least one of said left and right frames comprises a at least one locking unit (1103, 1104), and at least one slidable member (1101, 1102) arranged to provide sliding movement between at least one of said left and right frames and said base plate for displacement of at least one of said left front wheel and left rear wheel in relation to at least one of said right front wheel and right rear wheel, wherein said at least one locking unit is arranged to fix the position of at least one of said left and right frames in relation to said base plate.

3. Vehicle according to claim 2, comprising a frame control unit (125) adapted to provide off-set values, wherein said at least one wheel displacement unit comprises left frame actuators (121, 122) and right frame actuators (123, 124), wherein the left and right frame actuators are connected to said frame control unit, wherein said left frame actuators are arranged to adjust one of said first axial distances by displacement of said wheels of said left wheel pair relative to eachother, and wherein said right frame actuators are arranged adjust one of said second axial distances by displacement of said wheels of said right wheel pair relative to eachother, and wherein said displacements are based on said off-set values to provide said off-set.

4. Vehicle according to claim 3, wherein said off-set values are set according to a plurality of pre-defined values defined by a vehicle user, and/or wherein said vehicle comprise a transport surface detection unit (126) connected to said frame control unit, and a data memory (137) connected to said frame control unit, wherein said transport surface detection unit is adapted to provide topographical information of the vehicle transport surface, wherein said off-set values are based on said topographical information, and wherein said topographical information comprise dimensional data elements of said transportation surface being stored on said data memory.

5. Vehicle according to claim 4, wherein said surface detection unit comprise a receiver adapted to receive said dimensional data elements over a communication link (127), and/or wherein said transport surface detection unit comprise a sensor such as a photographic sensor, and/or an electromagnetic sensor such as an rfid sensor, and/or an acoustic sensor, and/or a distance measurement unit such as a laser measurement unit.

6. Vehicle according to claim 1, wherein said first level compensation system comprises a base plate levelling unit (132) arranged to reduce a rotational movement of said base plate upon a rotation of said left and right frames around said rotational axis.

7. Vehicle according to claim 6, wherein said base plate levelling unit comprises a base linkage (130) pivotably connected to said base plate at a center distance (201, 205) between said left and right frames, whereby said base linkage is rotatable with respect to said base plate around a pivot axis (131) perpendicular to said rotational axis, wherein ends of said base linkage are pivotably connected to said left frame and pivotably connected to said right frame, whereby upon a rotation of said left and right frames around said rotational axis said left frame has a first angular displacement (202) in relation to said right frame and said base plate has a second angular displacement (203) in relation to one of said left and right frames, and wherein said second angular displacement is less than said first angular displacement.

8. Vehicle according to claim 1-7, comprising a seat foundation (204) and a second level compensation system arranged for orientation of said seat foundation in space to maintain a level plane of said seat foundation in use of said vehicle.

9. Vehicle according to claim 8, wherein said second level compensation system comprises a pivotable support (133) connecting said seat foundation with said base plate.

10. Vehicle according to claim 9, wherein said second level compensation system comprise a support control unit (134) connected to a level detection unit (136) being adapted to provide levelling information to said support control unit, wherein said second level compensation system further comprise at least one support actuator (135, 301) connected to said support control unit and arranged to displace said pivotable support according to said levelling information.

11. Vehicle according to claim 10, comprising a first and second support actuator (135, 301) pivotably mounted to said base plate at displaced first and second joints (302, 303) and pivotably mounted to said pivotable support at a common third joint (304).

12. Vehicle according to claim 8, wherein said seat foundation is connected to a seat actuator (305), said seat actuator is connected to said level detection unit and arranged to displace the seat foundation in accordance with said levelling information to maintain a level plane of said seat foundation.

13. Vehicle according to claim 9, wherein said second level compensation system comprises side struts (904, 905) pivotably connected to said seat foundation and said base plate at either side of said pivotable support, wherein said side struts are connected to said seat foundation by upper strut pivot joints (904, 905) and connected to said base plate by lower strut pivot joints (906, 907), wherein said pivotable support being connected to said base plate at a lower support pivot joint (305) and to said seat foundation at an upper support pivot joint (304), and wherein said upper strut pivot joints and said upper support pivot joint are arranged in a displaced configuration (910, 911) at said seat foundation, whereby said side struts are arranged to maintain a plane of said seat foundation upon a displacement of said pivotable support.

14. Method for traversing a stair case (501) with a vehicle according to claim 1, said stair case having a plurality of steps (502) for traversing in a first direction (503) at a stair angle (504), said stair case having an axis of inclination (505) parallel to said first direction and perpendicular to step edges (506), said vehicle having an apex point (507) adjacent to a seat foundation (204), and left and right wheel pairs having wheels (107, 108, 111, 112) connected to left and right frames (102, 103), said left and right frames being rotatable with respect to each other, said method comprising;
adjusting a wheel off-set (119, 120) of at least one wheel of said vehicle based on step dimensions (508, 509),
maintaining said apex point along said axis of inclination during said traversing by applying a first level compensation of a first level compensation system comprising alternating rotational movement of said left and right frames.

15. Method according to claim 14, wherein maintaining said apex point along said axis of inclination during said traversing comprise applying a second level compensation of a second level compensation system comprising displacing a pivotable support (133) joining said left and right frames with said seat foundation.
